# EUROPEAN PATENT SPECIFICATION

(11) **EP 3 442 167 B1**
(45) Date of publication and mention of the grant of the patent: **25.03.2020**
(21) Application number: 17185211.4
(22) Date of filing: 08.08.2017
(51) Int. Cl.: H04L 12/28, H04L 12/891, H04L 12/707, H04L 12/723

(54) **METHOD FOR PROVIDING AN ENHANCED AND/OR MORE EFFICIENT HYBRID ACCESS FUNCTIONALITY WITHIN A TELECOMMUNICATIONS NETWORK, BASE STATION ENTITY, HYBRID ACCESS AGGREGATION POINT NODE, AND SYSTEM FOR PROVIDING AN ENHANCED AND/OR MORE EFFICIENT HYBRID ACCESS FUNCTIONALITY WITHIN A TELECOMMUNICATIONS NETWORK, PROGRAM AND COMPUTER PROGRAM PRODUCT**
VERFAHREN ZUR BEREITSTELLUNG EINER VERBESSERTEN UND/ODER EFFIZIENTEREN HYBRIDZUGRIFFSFUNKTIONALITÄT IN EINEM TELEKOMMUNIKATIONSNETZWERK, BASISSTATIONSEINHEIT, HYBRIDZUGRIFFSAGGREGATIONSPUNKTKNOTEN UND SYSTEM ZUR BEREITSTELLUNG EINER VERBESSERTEN UND/ODER EFFIZIENTEREN HYBRIDZUGRIFFSFUNKTIONALITÄT IN EINEM TELEKOMMUNIKATIONSNETZWERK, PROGRAMM UND COMPUTERPROGRAMMPRODUKT
PROCÉDÉ DE FOURNITURE D'UNE FONCTIONNALITÉ D'ACCÈS HYBRIDE AMÉLIORÉE ET/OU PLUS EFFICACE DANS UN RÉSEAU DE TÉLÉCOMMUNICATIONS, ENTITÉ DE STATION DE BASE, NOEUD DE POINT D'AGRÉGATION D'ACCÈS HYBRIDE ET SYSTÈME DE FOURNITURE D'UNE FONCTIONNALITÉ D'ACCÈS HYBRIDE AMÉLIORÉE ET/OU PLUS EFFICACE DANS UN RÉSEAU DE TÉLÉCOMMUNICATIONS, PROGRAMME ET PRODUIT- PROGRAMME INFORMATIQUE

(43) Date of publication of application: 13.02.2019
(73) Proprietor: Deutsche Telekom AG, 53113 Bonn (DE)
(72) Inventor: NJEGOVAN, Marko, 53111 Bonn (DE)
(74) Representative: Schwöbel, Thilo K.

(56) References cited:
- EP-A1- 2 728 802
- EP-A1- 3 182 659
- LEYMANN C HEIDEMANN DEUTSCHE TELEKOM AG M ZHANG HUAWEI M WASSERMAN PAINLESS SECURITY N: "GRE Tunnel Bonding; draft-zhang-gre-tunnel-bonding-00.txt", GRE TUNNEL BONDING; DRAFT-ZHANG-GRE-TUNNEL-BONDING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1-39, XP015107539, [retrieved on 2015-07-06]

## Description

### BACKGROUND

The present invention relates a method for providing an enhanced and/or more efficient hybrid access functionality within a telecommunications network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the telecommunications network comprises a hybrid access aggregation point node,
wherein the method comprises establishing a first user plane data transmission path and at least a second user plane data transmission path between, on the one hand, either the at least one client device or the home gateway device, and, on the other hand, the hybrid access aggregation point node.

Additionally, the present invention relates to a base station entity for providing an enhanced and/or more efficient hybrid access functionality within a telecommunications network, the base station entity being part of an access network of a mobile communication network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the telecommunications network comprises a hybrid access aggregation point node, wherein the base station entity is configured such that a first user plane data transmission path and at least a second user plane data transmission path is established between, on the one hand, either the at least one client device or the home gateway device, and, on the other hand, the hybrid access aggregation point node.

Still additionally, the present invention relates to a hybrid access aggregation point node for providing an enhanced and/or more efficient hybrid access functionality within a telecommunications network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the base station entity is configured such that a first user plane data transmission path and at least a second user plane data transmission path is established between, on the one hand, either the at least one client device or the home gateway device, and, on the other hand, the hybrid access aggregation point node.

Additionally, the present invention relates to a system for providing an enhanced and/or more efficient hybrid access functionality within a telecommunications network, wherein, by means of using the home gatetway device, at least one client device is able to be connected to the telecommunications network via a first access network and via a second access network, the system comprising the home gatetway device, the first and second access network, and the telecommunications network, the first access network being an access network of a fixed line telecommunications network and the second access network being an access network of a mobile communication network, wherein the telecommunications network comprises a hybrid access aggregation point node,
wherein the system is configured such that a first user plane data transmission path and at least a second user plane data transmission path is established between, on the one hand, either the at least one client device or the home gateway device, and, on the other hand, the hybrid access aggregation point node.

Furthermore, the present invention relates to a program and to a computer program product for providing an enhanced and/or supplementary network connectivity to at least one client device that is connected to a telecommunications network using a customer premises equipment device.

The present invention generally relates to the area of providing network access to client devices being connected to a telecommunications network. Typically, such client devices use a network connectivity link provided by a customer premises equipment device that connects the client device to a telecommunications network. Such network connectivity to a telecommunications network is typically required in order to provide internet-based services and applications to the client devices to fulfill people's needs in areas such as communication, banking, shopping, information, education and entertainment. Hence, high performance internet access solutions are an important prerequisite. Currently, residential customers use DSL technologies (such as ADSL or VDSL) for Internet access, whereas mobile customers use cellular technologies (such as GSM, UMTS or LTE).

It is also known, from the publication EP2 728 802, to use hybrid access connectivity schemes by using hybrid access home gateways, i.e. customer premises equipment devices that are enabled to connect the client device both wirelessly to a wireless access network and using a fixed line connection to a wireline access network, which is what telecommunications operators are offering by means of bundles of mobile and fixed access to provide more bandwidth to customers. In such a situation, there are currently typically two different traffic paths, one via the fixed line access (typically using a digital subscriber line (DSL) technology) for fixed access, and one via a base station entity (typically an eNodeB) for mobile access. In currently used implementations of such hybrid access connectivity schemes, there is typically an IPsec tunnel established from the corresponding base station entity (typicallly an eNodeB) towards the evolved packet core (EPC) which then forwards user plane traffic to a network node having a hybrid access aggregation point functionality. Such a network node functions to aggregate fixed and mobile traffic. Typically, this mobile user traffic path involves several traffic transfer steps (or to multiply a transfer of traffic) by or within the IP core, hence requiring multiple processing by the mobile packet core. It is also known from the publication "GRE Tunnel Bonding draft-zhang-gre-tunnel-bonding-OO.txt", N. LEYMANN and C.HEIDEMANN, M. ZHANG, M. WASSERMANN, 06-07-2015, Internet Draft, an Hybrid Access focusing on the case that DSL connection and LTE connection are bonded together to form a bonding connection. A GRE tunnel is set up for each connection and these tunnels are further bonded together to form a logical GRE tunnel.

### SUMMARY

An object of the present invention is to provide an effective, simple and comparatively cheap solution such that an enhanced and/or more efficient hybrid access functionality is possible to be realized within a telecommunications network by means of establishing a first user plane data transmission path and at least a second user plane data transmission path between, on the one hand, either the at least one client device or the home gateway device, and, on the other hand, the hybrid access aggregation point node in an effective and flexible manner.

The object of the present invention is achieved by a method for providing an enhanced and/or more efficient hybrid access functionality within a telecommunications network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the telecommunications network comprises a hybrid access aggregation point node,
wherein the method comprises establishing a first user plane data transmission path and at least a second user plane data transmission path between, on the one hand, either the at least one client device or the home gateway device, and, on the other hand, the hybrid access aggregation point node,
wherein, in order to establish the first user plane data transmission path, the home gatetway device is connected to a broadband access node of the first access network, the broadband access node being connected to the hybrid access aggregation point node, and, in order to establish the second user plane data transmission path, the home gatetway device is connected to a base station entity of the second access network, the base station entity being connected to the hybrid access aggregation point node, wherein in order to establish the second user plane data transmission path, the method comprises the following steps:
-- in a first step, an attach procedure is initiated by means of transmitting an attach request to the base station entity,
-- in a second step subsequent to the first step, the attach procedure is performed by means of an authentication procedure executed by the base station entity,
-- in a third step subsequent to the second step, a tunnel is established towards the hybrid access aggregation point node.

It is thereby advantageously possible, according to the present invention, that hybrid access, i.e. internet connectivity, is able to be provided to the client device, i.e. connectivity provided to the client device (or plurality of client devices, e.g. devices located in a home network) in a more effective manner, especially by means of reducing to handle and transfer the same data several times, especially by means of optimizing the mobile path of the hybrid access.

When hybrid access is realized, user plane traffic for such hybrid access is typically transported in the following manner: There is a user plane traffic treatment for the fixed line network (fixed path user plane, typically using a digital subscriber line connection), and a user plane traffice treatment for the mobile network (mobile path user plane, typically using LTE radio access). According to the present invention, mobile path user plane traffic (typically using LTE radio access) is modified with regard to conventionally transporting mobile path user plane traffic. Conventionally, user traffic from home gateway uses LTE radio and terminates on the base station entity (typically an eNodeB). The base station entity (or eNodeB) then typically uses IPsec tunnel, typically established upfront, to transfer the user plane data data to an EPC service area (evolved packet core service area), and to a P-GW node (packet gateway node). From the P-GW (or pacekt gateway node), the user plane traffic is normally processed and, if needed, forwarded to the hybrid access service area (to a hybrid access aggregation point (or HAAP) node. In conventionally telecommunications networks IP backbone transport capabilities are used to transport traffic between these mentioned nodes, especially the EPC service area, and the hybrid access service area (with the hybrid access aggregation point node). This means that, according to a conventional treatment of such user plane traffic, such user plane traffic (coming from the client device, i.e. in upstream direction) first enters a first label edge router (LER), after being tunneled on the base station entity eNodeB using IPsec, then on label edge router (LER) on the EPC service area, the user plane traffic is delivered on the packet gateway node (P-GW) for processing and forwarding to HAAP (Hybrid Access Aggregation Point or hybrid access aggregation point node). This means that the user plane traffic in conventional networks subsequently enters again the IP backbone, typically on the same label edge router (LER), and it is transported to HA (Hybrid Access) service area. On the label edge router (LER) in the hybrid access service area, the user plane traffic is delivered to the hybrid access aggregation point node (HAAP), and, at the hybrid access aggregation point node, joined with the fixed path and forwarded to responding networks etc. internet.

According to the present invention, it is advantageously possible to overcome such multiple treatment (especially in the evolved packet core service area) together with the associated entry, exit, and re-entry of the mobile part user plane traffice in the IP backbone of the telecommunications network, and, hence, the drawback of limits that fixed network operators often face in providing end customers with broadband transmission capacities (or connectivity), i.e. to provide sufficiently performant internet connectivity (in terms of parameters such as bandwidth and/or latency or the like) in order to meet the end customers' demands. Advantageously, the present invention provides a solution so that customers get - continuously or at specific points in time and hence in order to meet peak demand - an increased capacity of internet connectivity available at home in a flexible manner.

According to the present invention, it is assumed that a user, using a client device requiring internet connectivity, needs to use an access network (of a telecommunications network) in order to get such internet connectivity (provided by the telecommunications network, via the access network). Examples of such access networks include, but are not limited to, fixed line (or wireline) access networks, typically used to connect digital subscriber line clients or customers such as cable networks or coaxial based networks, or mobile access networks. The fixed line access networks include all kinds of connection type of the last mile, such as electrical, optical, etc. Likewise, the mobile access networks include all kinds of wireless connections, i.e. air interfaces, such as 2G, 3G, 4G, 5G mobile communication networks, connections to local or short range access points WLAN or WiFi or Bluetooth access points, as well as combinations of such mobile communication network (air) interfaces and WLAN or WiFi access possibilities.

According to the present invention, it is supposed that the home gatetway device has - while being used - a first interface towards a first (typically fixed line) access network of a first (fixed line) telecommunications network, whereby a network connectivity is provided between the telecommunications network and the at least one client device. Additionally, it is assumed according to the present invention that by means of using the home gatetway device, the client device is able to be connected to the telecommunications network via a second access network, the second access network being an access network of a mobile communication network.

Furthermore, it is supposed according to the present invention that the telecommunications network comprises a hybrid access aggregation point node, a first user plane data transmission path and at least a second user plane data transmission path, being established between, on the one hand, either the at least one client device or the home gateway device, and, on the other hand, the hybrid access aggregation point node. In order to establish the first user plane data transmission path, the home gatetway device is connected to a broadband access node of the first access network, the broadband access node being connected to the hybrid access aggregation point node. In order to establish the second user plane data transmission path, the home gatetway device is connected to a base station entity of the second access network, the base station entity being connected to the hybrid access aggregation point node.

According to the present invention, in order to establish the second user plane data transmission path, the method comprises the following steps:
-- in a first step, an attach procedure is initiated by means of transmitting an attach request to the base station entity,
-- in a second step subsequent to the first step, the attach procedure is performed by means of an authentication procedure executed by the base station entity,
-- in a third step subsequent to the second step, a tunnel, especially a secure tunnel, is established towards the hybrid access aggregation point node.

Thereby, it is advantageously possible according to the present invention that the second user plane data transmission path (especially between the involved base station entity, or eNodeB, and the hybrid access aggregation point node) can be more efficiently realized and operated.

According to the present invention, it is advantageously possible to provide the tunnel as a secure tunnel or as a tunnel that is either a non-secured tunnel or a tunnel that is not specifically secured or hardened, especially if the tunnel is established and used entirely within a proprietary network.

According to a preferred embodiment of the present invention, the tunnel is a secure tunnel, especially corresponding to a tunnel of the internet protocol security protocol suite (IPsec tunnel), and/or wherein the tunnel, especially the secure tunnel is established between, on the one hand, either the home gateway device, or the base station entity, and, on the other hand, the hybrid access aggregation point node.

It is thereby advantageously possible to provide and/or to realize and&or to establish and/or to operate the second user plane data transmission path more efficiently.

According to a further preferred embodiment of the present invention, the tunnel corresponds to a direct secure tunnel between, on the one hand, either the at least one client device or the home gateway device, and, on the other hand, the hybrid access aggregation point node.

By means of using a direct secure tunnel between, on the one hand, either the at least one client device or the home gateway device, and, on the other hand, the hybrid access aggregation point node, it is advantageously possible to greatly simplify both the data transmission on the second user plane data transmission path, and the operation of the data transmission on that data transmission path.

According to a further preferred embodiment of the present invention, the telecommunications network comprises, besides a hybrid access aggregation service area and a corresponding hybrid access aggregation label edge router, an enhanced packet core service area and a corresponding enhanced packet core label edge router, wherein the second user plane data transmission path completely bypasses the enhanced packet core service area and the enhanced packet core label edge router.

By means of the second user plane data transmission path bypassing the enhanced packet core service area and the enhanced packet core label edge router, it is advantageously possible to simplify both the data transmission on the second user plane data transmission path, and the operation of its data transmission.

According to still a further embodiment of the present invention, the telecommunications network comprises, a broadband remote access server service area and a corresponding broadband remote access server label edge router, wherein the first user plane data transmission path passes through the broadband remote access server service area and the corresponding broadband remote access server label edge router.

The present invention furthermore also relates to a base station entity for providing an enhanced and/or more efficient hybrid access functionality within a telecommunications network, the base station entity being part of an access network of a mobile communication network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the telecommunications network comprises a hybrid access aggregation point node, wherein the base station entity is configured such that a first user plane data transmission path and at least a second user plane data transmission path is established between, on the one hand, either the at least one client device or the home gateway device, and, on the other hand, the hybrid access aggregation point node,
wherein, in order to establish the first user plane data transmission path, the home gatetway device is connected to a broadband access node of the first access network, the broadband access node being connected to the hybrid access aggregation point node, and, in order to establish the second user plane data transmission path, the home gatetway device is connected to the base station entity being part of the second access network, the base station entity being connected to the hybrid access aggregation point node,
wherein in order to establish the second user plane data transmission path, the base station entity is configured such that:
-- an attach procedure is initiated by means of receiving, by the base station entity, an attach request,
-- the attach procedure is performed by means of an authentication procedure executed by the base station entity,
-- a tunnel, especially a secure tunnel, is established towards the hybrid access aggregation point node.

Thereby, it is advantageously possible, according to the present invention, that hybrid access, i.e. internet connectivity, is able to be provided to the client device, i.e. connectivity provided to the client device (or plurality of client devices, e.g. devices located in a home network) in a more effective manner, especially by means of reducing to handle and transfer the same data several times, especially by means of optimizing the mobile path of the hybrid access.

Furthermore, the present invention relates to a hybrid access aggregation point node for providing an enhanced and/or more efficient hybrid access functionality within a telecommunications network, wherein, by means of using a home gatetway device, at least one client device is able to be connected to the telecommunications network via a first access network and via a second access network, the first access network being an access network of a fixed line telecommunications network and the second access network being an access network of a mobile communication network, wherein the base station entity is configured such that a first user plane data transmission path and at least a second user plane data transmission path is established between, on the one hand, either the at least one client device or the home gateway device, and, on the other hand, the hybrid access aggregation point node,
wherein, in order to establish the first user plane data transmission path, the home gatetway device is connected to a broadband access node of the first access network, the broadband access node being connected to the hybrid access aggregation point node, and, in order to establish the second user plane data transmission path, the home gatetway device is connected to the base station entity being part of the second access network, the base station entity being connected to the hybrid access aggregation point node,
wherein in order to establish the second user plane data transmission path, the hybrid access aggregation point node is configured such that a tunnel, especially a secure tunnel, is established, between, on the one hand, the at least one client device or the home gateway device or the base station entity, and, on the other hand, the hybrid access aggregation point node.

Thereby, it is advantageously possible, according to the present invention, that hybrid access, i.e. internet connectivity, is able to be provided to the client device, i.e. connectivity provided to the client device (or plurality of client devices, e.g. devices located in a home network) in a more effective manner, especially by means of reducing to handle and transfer the same data several times, especially by means of optimizing the mobile path of the hybrid access.

The present invention furthermore also relates to a system for providing an enhanced and/or more efficient hybrid access functionality within a telecommunications network, wherein, by means of using the home gatetway device, at least one client device is able to be connected to the telecommunications network via a first access network and via a second access network, the system comprising the home gatetway device, the first and second access network, and the telecommunications network, the first access network being an access network of a fixed line telecommunications network and the second access network being an access network of a mobile communication network, wherein the telecommunications network comprises a hybrid access aggregation point node,
wherein the system is configured such that a first user plane data transmission path and at least a second user plane data transmission path is established between, on the one hand, either the at least one client device or the home gateway device, and, on the other hand, the hybrid access aggregation point node,
wherein, in order to establish the first user plane data transmission path, the home gatetway device is connected to a broadband access node of the first access network, the broadband access node being connected to the hybrid access aggregation point node, and, in order to establish the second user plane data transmission path, the home gatetway device is connected to a base station entity of the second access network, the base station entity being connected to the hybrid access aggregation point node, wherein in order to establish the second user plane data transmission path, the system is configured such that:
-- an attach procedure is initiated by means of transmitting an attach request to the base station entity,
-- the attach procedure is performed by means of an authentication procedure executed by the base station entity,
-- a tunnel, especially a secure tunnel, is established towards the hybrid access aggregation point node.

Thereby, it is advantageously possible, according to the present invention, that hybrid access, i.e. internet connectivity, is able to be provided to the client device, i.e. connectivity provided to the client device (or plurality of client devices, e.g. devices located in a home network) in a more effective manner, especially by means of reducing to handle and transfer the same data several times, especially by means of optimizing the mobile path of the hybrid access.

Additionally, the present invention relates to a program comprising a computer readable program code which, when executed on a computer or on a home gatetway device or on a base station entity or on a hybrid access aggregation point node, or in part on the home gatetway device and/or in part on the base station entity and/or in part on the hybrid access aggregation point node, causes the computer or the home gatetway device or the base station entity or the hybrid access aggregation point node to perform the inventive method.

Still additionally, the present invention relates to a computer program product for providing an enhanced and/or more efficient hybrid access functionality within a telecommunications network, the computer program product comprising a computer program stored on a storage medium, the computer program comprising program code which, when executed on a computer or on a home gatetway device or on a base station entity or on a hybrid access aggregation point node, or in part on the home gatetway device and/or in part on the base station entity and/or in part on the hybrid access aggregation point node, causes the computer or the home gatetway device or the base station entity or the hybrid access aggregation point node to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

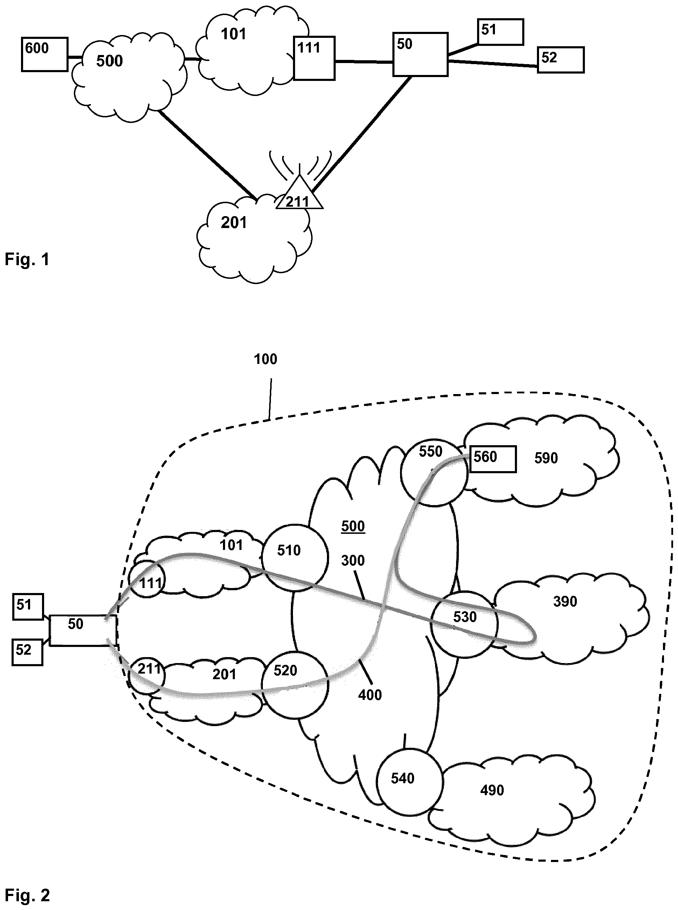

**Figure 1** schematically illustrates a system according to the present invention, comprising a telecommunications network, a first access network, a second access network, a plurality of client devices, and a home gatetway device according to the present invention.
**Figure 2** schematically illustrate another representation of the system according to the present invention, showing, compared to Figure 1, additional parts or components of the telecommunications network, the first access network, the second access network, the plurality of client devices, and the home gatetway device according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 (reference sign 100 is only used in Figure 2) and an inventive system is schematically shown, the system comprising a plurality of client devices 51, 52, and a home gatetway device 50. The telecommunications network 100 comprises a first access network 101 that connects the telecommunications network 100, via the customer premises equipment 50, to the client devices 51, 52. A second access network 201 likewise connects the telecommunications network 100, via the customer premises equipment 50, to the client devices 51, 52. The network connectivity provided to the client devices 51, 52 carries, e.g., the communication services of a specific server 600 that is either part of the telecommunications network 100 or external to the telecommunications network 100.

Figure 2 schematically shows another representation of the system and telecommunications network 100 according to the present invention. Compared to Figure 1, Figure 2 especially shows additional parts or components of the telecommunications network 100, and additionally also the first access network 101, the second access network 201, the plurality of client devices 51, 52, and the home gatetway device 50 according to the present invention. As an exemplary embodiment, just two client devices, the first client device 51, and the second client device 52 are schematically shown as an example of client devices requiring internet connectivity typically provided by the telecommunications network 100 using the first access network 101 and the second access network 201. By means of using the home gatetway device 50, the client devices 51, 52 (or at least one client device 51, 52) are or is able to be connected to the telecommunications network 100 via the first access network 101 and via a second access network 201, the first access network 101 being an access network 101 of a fixed line telecommunications network (or an access network of the fixed line type) and the second access network 201 being an access network of a mobile communication network (or an access network of the mobile type). According to the present invention, the home gatetway device 50 is an integrated device comprising both a modem functionality as well as a router device functionality (both are not specifically shown in Figures 1 and 2). A number of client devices (exemplarily represented by the first client device 51, and the second client device 52) are connected to the telecommunications network 100 requiring internet connectivity typically provided by the telecommunications network 100.

According to the present invention, an enhanced and/or more efficient hybrid access functionality is possible within the telecommunications network 100. The telecommunications network 100 comprises a hybrid access aggregation point node 560, and the inventive method comprises establishing a first user plane data transmission path 300 and at least a second user plane data transmission path 400 between, on the one hand, either the at least one client device 51, 52 or the home gateway device 50, and, on the other hand, the hybrid access aggregation point node 560.

In order to establish the first user plane data transmission path 300, the home gatetway device 50 is connected to a broadband access node 111 of the first access network 101, the broadband access node 111 being connected to the hybrid access aggregation point node 560, and, in order to establish the second user plane data transmission path 400, the home gatetway device 50 is connected to a base station entity 211 of the second access network 201, the base station entity 211 being also connected to the hybrid access aggregation point node 560.

According to the present invention, in order to establish the second user plane data transmission path 400, the method comprises the following steps:
-- in a first step, an attach procedure is initiated by means of transmitting an attach request to the base station entity 211,
-- in a second step subsequent to the first step, the attach procedure is performed by means of an authentication procedure executed by the base station entity 211,
-- in a third step subsequent to the second step, a tunnel (especially a secure tunnel) is established towards the hybrid access aggregation point node 560.

It is preferred according to the present invention, that the tunnel is a secure tunnel, especially corresponding to a tunnel of the internet protocol security protocol suite (IPsec tunnel). Especially, either cumulatively or alternatively (to the (secure) tunnel corresponding to a tunnel of the internet protocol security protocol suite (IPsec tunnel)) the secure tunnel is established between, on the one hand, either the home gateway device 50, or the base station entity 211, and, on the other hand, the hybrid access aggregation point node 560.

Especially, the tunnel corresponds to a direct secure tunnel between, on the one hand, either the at least one client device 51, 52 or the home gateway device 50, and, on the other hand, the hybrid access aggregation point node 560.

The telecommunications network 100 as shown in Figure 2 comprises a hybrid access aggregation service area 590 (comprising or being related to the hybrid access aggregation point node 560), and a corresponding hybrid access aggregation label edge router 550. Furthermore, the telecommunications network 100 as shown in Figure 2 comprises an enhanced packet core service area 490 and a corresponding enhanced packet core label edge router 540. According to the present invention, it is especially preferred (and shown in Figure 2) that the second user plane data transmission path 400 completely bypasses the enhanced packet core service area 490 and the enhanced packet core label edge router 540.

The telecommunications network 100 as shown in Figure 2 additionally comprises a broadband remote access server service area 390 and a corresponding broadband remote access server label edge router 530, wherein the first user plane data transmission path 300 especially passes through the broadband remote access server service area 390 and the corresponding broadband remote access server label edge router 530.

According to the present invention, it is avoided that the second user plane data is routed through the enhance packet core service area 490, and hence a multiplication of its handling by an IP backbone 500 of the telecommunications network 100 can be avoided. In order to achieve this traffic offload, the present invention proposes that - for user traffic - the base station entity 211 (or eNodeB) to have a direct tunnel towards the hybrid access aggregation point node 560. That is possible as customers having or using hybrid access are typically fixed in terms of location and there is typically no need for mobility. The base station entity 211 (or eNodeB), after an initial authentication procedure, performes in conventionally known processes, and establishes an IPsec tunnel (or a tunnel of the internet protocol security protocol suite) for user traffic directly towards the hybrid access aggregation point node 560.

According to the present invention, the process is established in the following steps:
-- Upon user request, the home gatetway device 50 initiates the attach procedure by transmitting an attach request to the base station entity or eNodeB 211;
-- the base station entity or eNodeB 211 forwards the request to the mobility management entity (or mobility management entity node or mobility management entity functionality; not shown in Figures 1 and 2), which authenticates the user or customer or subscriber (or the client device 51, 52) on a home subscriber server (or home subscriber server node or home subscriber server functionality; likewise not shown in Figures 1 and 2);
-- after authentication, the base station entity 211 (or eNodeB) establishes an IPsec tunnel directly towards the hybrid access aggregation point node 560 for the user plane;
-- on the hybrid access aggregation point node 560, the same procedure is applied for joining users traffic send via fixed and mobile path (i.e. user plane traffic of the first user plane data transmission path 300 and the second user plane data transmission path 400).

Hence, Figure 2 shows the hybrid access user plane paths with optimized mobile path (i.e. second user plane data transmission path 400), with the base station entity 211 or eNodeB using the established IPsec tunnel directly towards to hybrid access aggregation point node 560. The proposed optimized user traffic path (concerning the second user plane data transmission path 400) is especially established from the home gateway device 50 via the base station entity 211 or eNodeB and pre-established IPsec tunnel to the hybrid access service area 590 where it is joined with fixed path (i.e. the first user plane data transmission path 300) on the hybrid access aggregation point node 560 and forwarded to responding networks 600, for example the internet.

According to the present invention, it is advantageously possible to optimize the use of the overall throughput in the IP backbone 500. The IP backbone 500 exemplarily comprises a number of label edge routers: a first access network label edge router 510, a second access network label edge router 520, a broadband remote access server label edge router 530, an enhanced packet core label edge router 540, and a hybrid access aggregation label edge router 550. Especially according to the present invention, there is no more need to transfer user data from the base station entity 211 (or eNodeB) to the enhance packet core service area 490 and then to the hybrid access service area 590. Especially, that means that there is 50% less (mobile user plane-related traffic) in the IP backbone 500. Furthermore, as there is no more need to process data in the enhanced packet core service area 490, and by the corresponding label edge router node (LER, enhanced packet core label edge router 540) and the packet gateway node (P-GW, not specifically shown in Figure 2) in the enhanced packet core service area 490. This all leads to a reduced number of hops in the network, which directly means lower time delay of the corresponding data packets transported or transmitted. All this leads to significant costs reductions in the IP backbone 500, the corresponding label edge routers or label edge router nodes and on the packet gateway node or nodes (P-GW nodes).

## Claims

1. Method for providing an enhanced and/or more efficient hybrid access functionality within a telecommunications network (100), wherein, by means of using a home gatetway device (50), at least one client device (51, 52) is able to be connected to the telecommunications network (100) via a first access network (101) and via a second access network (201), the first access network (101) being an access network of a fixed line telecommunications network and the second access network (201) being an access network of a mobile communication network, wherein the telecommunications network (100) comprises a hybrid access aggregation point node (560),
wherein the method comprises establishing a first user plane data transmission path (300) and at least a second user plane data transmission path (400) between, on the one hand, either the at least one client device (51, 52) or the home gateway device (50), and, on the other hand, the hybrid access aggregation point node (560),
wherein, in order to establish the first user plane data transmission path (300), the home gateway device (50) is connected to a broadband access node (111) of the first access network (101), the broadband access node (111) being connected to the hybrid access aggregation point node (560), and, in order to establish the second user plane data transmission path (400), the home gateway device (50) is connected to a base station entity (211) of the second access network (201), the base station entity (211) being connected to the hybrid access aggregation point node (560),
wherein in order to establish the second user plane data transmission path (400), the method comprises the following steps:
-- in a first step, an attach procedure is initiated by means of transmitting an attach request to the base station entity (211),
-- in a second step subsequent to the first step, the attach procedure is performed by means of an authentication procedure executed by the base station entity (211),
-- in a third step subsequent to the second step, a tunnel is established towards the hybrid access aggregation point node (560).

2. Method according to claim 1, wherein the tunnel is a secure tunnel, especially corresponding to a tunnel of the internet protocol security protocol suite (IPsec tunnel), and/or wherein the tunnel, especially the secure tunnel, is established between, on the one hand, either the home gateway device (50), or the base station entity (211), and, on the other hand, the hybrid access aggregation point node (560).

3. Method according to one of the preceding claims, wherein the tunnel corresponds to a direct secure tunnel between, on the one hand, either the at least one client device (51, 52) or the home gateway device (50), and, on the other hand, the hybrid access aggregation point node (560).

4. Method according to one of the preceding claims, wherein the telecommunications network (100) comprises, besides a hybrid access aggregation service area (590) and a corresponding hybrid access aggregation label edge router (550), an enhanced packet core service area (490) and a corresponding enhanced packet core label edge router (540), wherein the second user plane data transmission path (400) completely bypasses the enhanced packet core service area (490) and the enhanced packet core label edge router (540).

5. Method according to one of the preceding claims, wherein the telecommunications network (100) comprises, a broadband remote access server service area (390) and a corresponding broadband remote access server label edge router (530), wherein the first user plane data transmission path (300) passes through the broadband remote access server service area (390) and the corresponding broadband remote access server label edge router (530).

6. Base station entity (211) for providing an enhanced and/or more efficient hybrid access functionality within a telecommunications network (100), the base station entity (211) being part of an access network of a mobile communication network, wherein, by means of using a home gatetway device (50), at least one client device (51, 52) is able to be connected to the telecommunications network (100) via a first access network (101) and via a second access network (201), the first access network (101) being an access network of a fixed line telecommunications network and the second access network (201) being an access network of a mobile communication network, wherein the telecommunications network (100) comprises a hybrid access aggregation point node (560),
wherein the base station entity (211) is configured such that a first user plane data transmission path (300) and at least a second user plane data transmission path (400) is established between, on the one hand, either the at least one client device (51, 52) or the home gateway device (50), and, on the other hand, the hybrid access aggregation point node (560), wherein, in order to establish the first user plane data transmission path (300), the home gateway device (50) is connected to a broadband access node (111) of the first access network (101), the broadband access node (111) being connected to the hybrid access aggregation point node (560), and, in order to establish the second user plane data transmission path (400), the home gateway device (50) is connected to the base station entity (211) being part of the second access network (201), the base station entity (211) being connected to the hybrid access aggregation point node (560),
wherein in order to establish the second user plane data transmission path (400), the base station entity (211) is configured such that:
-- an attach procedure is initiated by means of receiving, by the base station entity (211), an attach request,
-- the attach procedure is performed by means of an authentication procedure executed by the base station entity (211),
-- a tunnel is established towards the hybrid access aggregation point node (560).

7. Hybrid access aggregation point node (560) for providing an enhanced and/or more efficient hybrid access functionality within a telecommunications network (100), wherein, by means of using a home gateway device (50), at least one client device (51, 52) is able to be connected to the telecommunications network (100) via a first access network (101) and via a second access network (201), the first access network (101) being an access network of a fixed line telecommunications network and the second access network (201) being an access network of a mobile communication network,
wherein the base station entity (211) is configured such that a first user plane data transmission path (300) and at least a second user plane data transmission path (400) is established between, on the one hand, either the at least one client device (51, 52) or the home gateway device (50), and, on the other hand, the hybrid access aggregation point node (560),
wherein, in order to establish the first user plane data transmission path (300), the home gateway device (50) is connected to a broadband access node (111) of the first access network (101), the broadband access node (111) being connected to the hybrid access aggregation point node (560), and, in order to establish the second user plane data transmission path (400), the home gateway device (50) is connected to the base station entity (211) being part of the second access network (201), the base station entity (211) being connected to the hybrid access aggregation point node (560),
wherein in order to establish the second user plane data transmission path (400), the hybrid access aggregation point node (560) is configured such that a tunnel is established, between, on the one hand, the at least one client device (51, 52) or the home gateway device (50) or the base station entity (211), and, on the other hand, the hybrid access aggregation point node.

8. System for providing an enhanced and/or more efficient hybrid access functionality within a telecommunications network (100), wherein, by means of using the home gateway device (50), at least one client device (51, 52) is able to be connected to the telecommunications network (100) via a first access network (101) and via a second access network (201), the system comprising the home gateway device (50), the first and second access network (101, 201), and the telecommunications network (100), the first access network (101) being an access network of a fixed line telecommunications network and the second access network (201) being an access network of a mobile communication network, wherein the telecommunications network (100) comprises a hybrid access aggregation point node (560),
wherein the system is configured such that a first user plane data transmission path (300) and at least a second user plane data transmission path (400) is established between, on the one hand, either the at least one client device (51, 52) or the home gateway device (50), and, on the other hand, the hybrid access aggregation point node (560),
wherein, in order to establish the first user plane data transmission path (300), the home gateway device (50) is connected to a broadband access node (111) of the first access network (101), the broadband access node (111) being connected to the hybrid access aggregation point node (560), and, in order to establish the second user plane data transmission path (400), the home gateway device (50) is connected to a base station entity (211) of the second access network (201), the base station entity (211) being connected to the hybrid access aggregation point node (560),
wherein in order to establish the second user plane data transmission path (400), the system is configured such that:
-- an attach procedure is initiated by means of transmitting an attach request to the base station entity (211),
-- the attach procedure is performed by means of an authentication procedure executed by the base station entity (211),
-- a tunnel is established towards the hybrid access aggregation point node (560).

9. Program comprising a computer readable program code which, when executed on a computer or on a home gatetway device (50) or on a base station entity (211) or on a hybrid access aggregation point node (560), or in part on the home gateway device (50) and/or in part on the base station entity (211) and/or in part on the hybrid access aggregation point node (560), causes the computer or the home gateway device (50) or the base station entity (211) or the hybrid access aggregation point node (560) to perform a method according to one of claims 1 to 5.

10. Computer program product for providing an enhanced and/or more efficient hybrid access functionality within a telecommunications network (100), the computer program product comprising a computer program stored on a storage medium, the computer program comprising program code which, when executed on a computer or on a home gateway device (50) or on a base station entity (211) or on a hybrid access aggregation point node (560), or in part on the home gateway device (50) and/or in part on the base station entity (211) and/or in part on the hybrid access aggregation point node (560), causes the computer or the home gateway device (50) or the base station entity (211) or the hybrid access aggregation point node (560) to perform a method according to one of claims 1 to 5.

## Patentansprüche

1. Verfahren zum Bereitstellen einer verbesserten und/oder effizienteren Hybridzugangsfunktionalität innerhalb eines Telekommunikationsnetzwerks (100), wobei, durch Verwenden einer Gateway-Heimvorrichtung (50), mindestens eine Client-Vorrichtung (51, 52) in der Lage ist, mit dem Telekommunikationsnetzwerk (100) über ein erstes Zugangsnetzwerk (101) und über ein zweites Zugangsnetzwerk (201) verbunden zu werden, wobei das erste Zugangsnetzwerk (101) ein Zugangsnetzwerk eines Festnetz-Telekommunikationsnetzwerks ist und das zweite Zugangsnetzwerk (201) ein Zugangsnetzwerk eines Mobilkommunikationsnetzwerks ist, wobei das Telekommunikationsnetzwerk (100) einen Hybridzugang-Aggregationspunktknoten (560) umfasst,
wobei das Verfahren ein Einrichten eines ersten Benutzerebene-Datenübertragungspfads (300) und mindestens eines zweiten Benutzerebene-Datenübertragungspfads (400) zwischen einerseits entweder der mindestens einen Client-Vorrichtung (51, 52) oder der Gateway-Heimvorrichtung (50) und andererseits dem Hybridzugang-Aggregationspunktknoten (560) umfasst,
wobei, um den ersten Benutzerebene-Datenübertragungspfad (300) einzurichten, die Gateway-Heimvorrichtung (50) mit einem Breitband-Zugangsknoten (111) des ersten Zugangsnetzwerks (101) verbunden wird, wobei der Breitband-Zugangsknoten (111) mit dem Hybridzugang-Aggregationspunktknoten (560) verbunden wird, und, um den zweiten Benutzerebene-Datenübertragungspfad (400) einzurichten, die Gateway-Heimvorrichtung (50) mit einer Basisstationseinheit (211) des zweiten Zugangsnetzwerks (201) verbunden wird, wobei die Basisstationseinheit (211) mit dem Hybridzugang-Aggregationspunktknoten (560) verbunden wird,
wobei, um den zweiten Benutzerebene-Datenübertragungspfad (400) einzurichten, das Verfahren die folgenden Schritte umfasst:
- in einem ersten Schritt wird ein Einbuchungsvorgang durch Übertragen einer Einbuchungsanfrage an die Basisstationseinheit (211) eingeleitet,
- in einem zweiten Schritt, der auf den ersten Schritt folgt, wird der Einbuchungsvorgang durch einen Authentifizierungsvorgang durchgeführt, der durch die Basisstationseinheit (211) ausgeführt wird,
- in einem dritten Schritt, der auf den zweiten Schritt folgt, wird ein Tunnel hin zu dem Hybridzugang-Aggregationspunktknoten (560) eingerichtet.

2. Verfahren nach Anspruch 1, wobei der Tunnel ein sicherer Tunnel ist, der insbesondere einem Tunnel der Internetprotokollsicherheit-Protokollsuite entspricht (IPsec-Tunnel), und/oder wobei der Tunnel, insbesondere der sichere Tunnel, zwischen einerseits entweder der Gateway-Heimvorrichtung (50) oder der Basisstationseinheit (211) und andererseits dem Hybridzugang-Aggregationspunktknoten (560) eingerichtet wird.

3. Verfahren nach einem der vorhergehenden Ansprüche, wobei der Tunnel einem direkten sicheren Tunnel zwischen einerseits entweder der mindestens einen Client-Vorrichtung (51, 52) oder der Gateway-Heimvorrichtung (50) und andererseits dem Hybridzugang-Aggregationspunktknoten (560) entspricht.

4. Verfahren nach einem der vorhergehenden Ansprüche, wobei das Telekommunikationsnetzwerk (100), neben einem Hybridzugangsaggregation-Dienstbereich (590) und einem entsprechenden Hybridzugangsaggregation-Label-Edge-Router (550), einen verbesserten Paketkerndienstbereich (490) und einen entsprechenden verbesserten Paketkern-Label-Edge-Router (540) umfasst, wobei der zweite Benutzerebene-Datenübertragungspfad (400) den verbesserten Paketkerndienstbereich (490) und den verbesserten Paketkern-Label-Edge-Router (540) vollständig umgeht.

5. Verfahren nach einem der vorhergehenden Ansprüche, wobei das Telekommunikationsnetzwerk (100) einen Breitband-Fernzugangsserver-Dienstbereich (390) und einen entsprechenden Breitband-Fernzugangsserver-Label-Edge-Router (530) umfasst, wobei der erste Benutzerebene-Datenübertragungspfad (300) durch den Breitband-Fernzugangsserver-Dienstbereich (390) und den entsprechenden Breitband-Fernzugangsserver-Label-Edge-Router (530) läuft.

6. Basisstationseinheit (211) zum Bereitstellen einer verbesserten und/oder effizienteren Hybridzugangsfunktionalität innerhalb eines Telekommunikationsnetzwerks (100), wobei die Basisstationseinheit (211) Teil eines Zugangsnetzwerks eines Mobilkommunikationsnetzwerks ist, wobei, durch Verwenden einer Gateway-Heimvorrichtung (50), mindestens eine Client-Vorrichtung (51, 52) in der Lage ist, mit dem Telekommunikationsnetzwerk (100) über ein erstes Zugangsnetzwerk (101) und über ein zweites Zugangsnetzwerk (201) verbunden zu werden, wobei das erste Zugangsnetzwerk (101) ein Zugangsnetzwerk eines Festnetz-Telekommunikationsnetzwerks ist und das zweite Zugangsnetzwerk (201) ein Zugangsnetzwerk eines Mobilkommunikationsnetzwerks ist, wobei das Telekommunikationsnetzwerk (100) einen Hybridzugang-Aggregationspunktknoten (560) umfasst,
wobei die Basisstationseinheit (211) derart eingerichtet ist, dass ein erster Benutzerebene-Datenübertragungspfad (300) und mindestens ein zweiter Benutzerebene-Datenübertragungspfad (400) zwischen einerseits entweder der mindestens einen Client-Vorrichtung (51,52) oder der Gateway-Heimvorrichtung (50) und andererseits dem Hybridzugang-Aggregationspunktknoten (560) eingerichtet wird,
wobei, um den ersten Benutzerebene-Datenübertragungspfad (300) einzurichten, die Gateway-Heimvorrichtung (50) mit einem Breitband-Zugangsknoten (111) des ersten Zugangsnetzwerks (101) verbunden wird, wobei der Breitband-Zugangsknoten (111) mit dem Hybridzugang-Aggregationspunktknoten (560) verbunden wird, und, um den zweiten Benutzerebene-Datenübertragungspfad (400) einzurichten, die Gateway-Heimvorrichtung (50) mit der Basisstationseinheit (211), die Teil des zweiten Zugangsnetzwerks (201) ist, verbunden wird, wobei die Basisstationseinheit (211) mit dem Hybridzugang-Aggregationspunktknoten (560) verbunden wird, wobei, um den zweiten Benutzerebene-Datenübertragungspfad (400) einzurichten, die Basisstationseinheit (211) derart eingerichtet ist, dass:
- ein Einbuchungsvorgang durch Empfangen, durch die Basisstationseinheit (211), einer Einbuchungsanfrage eingeleitet wird,
- der Einbuchungsvorgang durch einen Authentifizierungsvorgang durchgeführt wird, der durch die Basisstationseinheit (211) ausgeführt wird,
- ein Tunnel hin zu dem Hybridzugang-Aggregationspunktknoten (560) eingerichtet wird.

7. Hybridzugang-Aggregationspunktknoten (560) zum Bereitstellen einer verbesserten und/oder effizienteren Hybridzugangsfunktionalität innerhalb eines Telekommunikationsnetzwerks (100), wobei, durch Verwenden einer Gateway-Heimvorrichtung (50), mindestens eine Client-Vorrichtung (51, 52) in der Lage ist, mit dem Telekommunikationsnetzwerk (100) über ein erstes Zugangsnetzwerk (101) und über ein zweites Zugangsnetzwerk (201) verbunden zu werden, wobei das erste Zugangsnetzwerk (101) ein Zugangsnetzwerk eines Festnetz-Telekommunikationsnetzwerks ist und das zweite Zugangsnetzwerk (201) ein Zugangsnetzwerk eines Mobilkommunikationsnetzwerks ist,
wobei die Basisstationseinheit (211) derart eingerichtet ist, dass ein erster Benutzerebene-Datenübertragungspfad (300) und mindestens ein zweiter Benutzerebene-Datenübertragungspfad (400) zwischen einerseits entweder der mindestens einen Client-Vorrichtung (51,52) oder der Gateway-Heimvorrichtung (50) und andererseits dem Hybridzugang-Aggregationspunktknoten (560) eingerichtet wird,
wobei, um den ersten Benutzerebene-Datenübertragungspfad (300) einzurichten, die Gateway-Heimvorrichtung (50) mit einem Breitband-Zugangsknoten (111) des ersten Zugangsnetzwerks (101) verbunden wird, wobei der Breitband-Zugangsknoten (111) mit dem Hybridzugang-Aggregationspunktknoten (560) verbunden wird, und, um den zweiten Benutzerebene-Datenübertragungspfad (400) einzurichten, die Gateway-Heimvorrichtung (50) mit der Basisstationseinheit (311), die Teil des zweiten Zugangsnetzwerks (201) ist, verbunden wird, wobei die Basisstationseinheit (211) mit dem Hybridzugang-Aggregationspunktknoten (560) verbunden wird,
wobei, um den zweiten Benutzerebene-Datenübertragungspfad (400) einzurichten, der Hybridzugang-Aggregationspunktknoten (560) derart eingerichtet ist, dass ein Tunnel zwischen einerseits der mindestens einen Client-Vorrichtung (51, 52) oder der Gateway-Heimvorrichtung (50) oder der Basisstationseinheit (211) und andererseits dem Hybridzugang-Aggregationspunktknoten eingerichtet wird.

8. System zum Bereitstellen einer verbesserten und/oder effizienteren Hybridzugangsfunktionalität innerhalb eines Telekommunikationsnetzwerks (100), wobei, durch Verwenden der Gateway-Heimvorrichtung (50), mindestens eine Client-Vorrichtung (51, 52) in der Lage ist, mit dem Telekommunikationsnetzwerk (100) über ein erstes Zugangsnetzwerk (101) und über ein zweites Zugangsnetzwerk (201) verbunden zu werden, wobei das System die Gateway-Heimvorrichtung (50), das erste und zweite Zugangsnetzwerk (101, 201) und das Telekommunikationsnetzwerk (100) umfasst, wobei das erste Zugangsnetzwerk (101) ein Zugangsnetzwerk eines Festnetz-Telekommunikationsnetzwerks ist und das zweite Zugangsnetzwerk (201) ein Zugangsnetzwerk eines Mobilkommunikationsnetzwerks ist, wobei das Telekommunikationsnetzwerk (100) einen Hybridzugang-Aggregationspunktknoten (560) umfasst,
wobei das System derart eingerichtet ist, dass ein erster Benutzerebene-Datenübertragungspfad (300) und mindestens ein zweiter Benutzerebene-Datenübertragungspfad (400) zwischen einerseits entweder der mindestens einen Client-Vorrichtung (51, 52) oder der Gateway-Heimvorrichtung (50) und andererseits dem Hybridzugang-Aggregationspunktknoten (560) eingerichtet wird,
wobei, um den ersten Benutzerebene-Datenübertragungspfad (300) einzurichten, die Gateway-Heimvorrichtung (50) mit einem Breitband-Zugangsknoten (111) des ersten Zugangsnetzwerks (101) verbunden wird, wobei der Breitband-Zugangsknoten (111) mit dem Hybridzugang-Aggregationspunktknoten (560) verbunden wird, und, um den zweiten Benutzerebene-Datenübertragungspfad (400) einzurichten, die Gateway-Heimvorrichtung (50) mit einer Basisstationseinheit (211) des zweiten Zugangsnetzwerks (201) verbunden wird, wobei die Basisstationseinheit (211) mit dem Hybridzugang-Aggregationspunktknoten (560) verbunden wird,
wobei, um den zweiten Benutzerebene-Datenübertragungspfad (400) einzurichten, das System derart eingerichtet ist, dass:
- ein Einbuchungsvorgang durch Übertragen einer Einbuchungsanfrage an die Basisstationseinheit (211) eingeleitet wird,
- der Einbuchungsvorgang durch einen Authentifizierungsvorgang durchgeführt wird, der durch die Basisstationseinheit (211) ausgeführt wird,
- ein Tunnel hin zu dem Hybridzugang-Aggregationspunktknoten (560) eingerichtet wird.

9. Programm, umfassend einen computerlesbaren Programmcode, der, wenn er auf einem Computer oder auf einer Gateway-Heimvorrichtung (50) oder auf einer Basisstationseinheit (211) oder auf einem Hybridzugang-Aggregationspunktknoten (560) oder teilweise auf der Gateway-Heimvorrichtung (50) und/oder teilweise auf der Basisstationseinheit (211) und/oder teilweise auf dem Hybridzugang-Aggregationspunktknoten (560) ausgeführt wird, den Computer oder die Gateway-Heimvorrichtung (50) oder die Basisstationseinheit (211) oder den Hybridzugang-Aggregationspunktknoten (560) dazu veranlasst, ein Verfahren nach einem der Ansprüche 1 bis 5 durchzuführen.

10. Computerprogrammprodukt zum Bereitstellen einer verbesserten und/oder effizienteren Hybridzugangsfunktionalität innerhalb eines Telekommunikationsnetzwerks (100), wobei das Computerprogrammprodukt ein Computerprogramm umfasst, das auf einem Speichermedium gespeichert ist, wobei das Computerprogramm einen Programmcode umfasst, der, wenn er auf einem Computer oder auf einer Gateway-Heimvorrichtung (50) oder auf einer Basisstationseinheit (211) oder auf einem Hybridzugang-Aggregationspunktknoten (560) oder teilweise auf der Gateway-Heimvorrichtung (50) und/oder teilweise auf der Basisstationseinheit (211) und/oder teilweise auf dem Hybridzugang-Aggregationspunktknoten (560) ausgeführt wird, den Computer oder die Gateway-Heimvorrichtung (50) oder die Basisstationseinheit (211) oder den Hybridzugang-Aggregationspunktknoten (560) dazu veranlasst, ein Verfahren nach einem der Ansprüche 1 bis 5 durchzuführen.

## Revendications

1. Procédé pour fournir une fonctionnalité d'accès hybride plus efficace et/ou améliorée au sein d'un réseau de télécommunications (100), dans lequel, au moyen de l'utilisation d'un dispositif de passerelle domestique (50), au moins un dispositif client (51, 52) est capable de se connecter au réseau de télécommunications (100) via un premier réseau d'accès (101) et via un second réseau d'accès (201), le premier réseau d'accès (101) étant un réseau d'accès d'un réseau de télécommunications de ligne fixe et le second réseau d'accès (201) étant un réseau d'accès d'un réseau de communication mobile, dans lequel le réseau de télécommunications (100) comprend un nœud de point d'agrégation d'accès hybride (560),
dans lequel le procédé comprend l'établissement d'un premier trajet de transmission de données de plan utilisateur (300) et au moins un second trajet de transmission de données de plan utilisateur (400) entre, d'une part, l'au moins un dispositif client (51, 52) ou le dispositif de passerelle domestique (50), et, d'autre part, le nœud de point d'agrégation d'accès hybride (560),
dans lequel, afin d'établir le premier trajet de transmission de données de plan utilisateur (300), le dispositif de passerelle domestique (50) est connecté à un nœud d'accès à large bande (111) du premier réseau d'accès (101), le nœud d'accès à large bande (111) étant connecté au nœud de point d'agrégation d'accès hybride (560), et, afin d'établir le second trajet de transmission de données de plan utilisateur (400), le dispositif de passerelle domestique (50) est connecté à une entité de station de base (211) du second réseau d'accès (201), l'entité de station de base (211) étant connectée au nœud de point d'agrégation d'accès hybride (560),
dans lequel, afin d'établir le second trajet de transmission de données de plan utilisateur (400), le procédé comprend les étapes suivantes :
- dans une première étape, une procédure d'attachement est initiée au moyen de la transmission d'une demande d'attachement à l'entité de station de base (211),
- dans une deuxième étape ultérieure à la première étape, la procédure d'attachement est réalisée au moyen d'une procédure d'authentification exécutée par l'entité de station de base (211),
- dans une troisième étape ultérieure à la deuxième étape, un tunnel est établi vers le nœud de point d'agrégation d'accès hybride (560).

2. Procédé selon la revendication 1, dans lequel le tunnel est un tunnel sécurisé, correspondant notamment à un tunnel de la suite de protocole de sécurité de protocole Internet (tunnel IPsec), et/ou dans lequel le tunnel, notamment le tunnel sécurisé, est établi entre, d'une part, le dispositif de passerelle domestique (50), ou l'entité de station de base (211), et, d'autre part, le nœud de point d'agrégation d'accès hybride (560).

3. Procédé selon l'une des revendications précédentes, dans lequel le tunnel correspond à un tunnel sécurisé direct entre, d'une part, l'au moins un dispositif client (51, 52) ou le dispositif de passerelle domestique (50), et, d'autre part, le nœud de point d'agrégation d'accès hybride (560).

4. Procédé selon l'une des revendications précédentes, dans lequel le réseau de télécommunications (100) comprend, en plus d'une zone de service d'agrégation d'accès hybride (590) et d'un routeur de périphérie à étiquette d'agrégation d'accès hybride (550) correspondant, une zone de service de cœur de paquet amélioré (490) et un routeur de périphérie à étiquette de cœur de paquet amélioré (540), dans lequel le second trajet de transmission de données de plan utilisateur (400) contourne totalement la zone de service de cœur de paquet amélioré (490) et le routeur de périphérie à étiquette de cœur de paquet amélioré (540).

5. Procédé selon l'une des revendications précédentes, dans lequel le réseau de télécommunications (100) comprend une zone de service de serveur d'accès à distance à large bande (390) et un routeur de périphérie à étiquette de serveur d'accès à distance à large bande (530) correspondant, dans lequel le premier trajet de transmission de données de plan utilisateur (300) passe à travers la zone de service de serveur d'accès à distance à large bande (390) et le routeur de périphérie à étiquette de serveur d'accès à distance à large bande (530) correspondant.

6. Entité de station de base (211) pour fournir une fonctionnalité d'accès hybride plus efficace et/ou améliorée au sein d'un réseau de télécommunications (100), l'entité de station de base (211) faisant partie d'un réseau d'accès d'un réseau de communication mobile, dans laquelle, au moyen de l'utilisation d'un dispositif de passerelle domestique (50), au moins un dispositif client (51, 52) est capable de se connecter au réseau de télécommunications (100) via un premier réseau d'accès (101) et via un second réseau d'accès (201), le premier réseau d'accès (101) étant un réseau d'accès d'un réseau de télécommunications de ligne fixe et le second réseau d'accès (201) étant un réseau d'accès d'un réseau de communication mobile, dans laquelle le réseau de télécommunications (100) comprend un nœud de point d'agrégation d'accès hybride (560),
dans laquelle l'entité de station de base (211) est configurée de telle sorte qu'un premier trajet de transmission de données de plan utilisateur (300) et au moins un second trajet de transmission de données de plan utilisateur (400) sont établis entre, d'une part, l'au moins un dispositif client (51, 52) ou le dispositif de passerelle domestique (50), et, d'autre part, le nœud de point d'agrégation d'accès hybride (560),
dans laquelle, afin d'établir le premier trajet de transmission de données de plan utilisateur (300), le dispositif de passerelle domestique (50) est connecté à un nœud d'accès à large bande (111) du premier réseau d'accès (101), le nœud d'accès à large bande (111) étant connecté au nœud de point d'agrégation d'accès hybride (560), et, afin d'établir le second trajet de transmission de données de plan utilisateur (400), le dispositif de passerelle domestique (50) est connecté à l'entité de station de base (211) faisant partie du second réseau d'accès (201), l'entité de station de base (211) étant connectée au nœud de point d'agrégation d'accès hybride (560),
dans laquelle, afin d'établir le second trajet de transmission de données de plan utilisateur (400), l'entité de station de base (211) est configurée de telle sorte que :
- une procédure d'attachement est initiée au moyen de la réception, par l'entité de station de base (211), d'une demande d'attachement,
- la procédure d'attachement est réalisée au moyen d'une procédure d'authentification exécutée par l'entité de station de base (211),
- un tunnel est établi vers le nœud de point d'agrégation d'accès hybride (560).

7. Nœud de point d'agrégation d'accès hybride (560) pour fournir une fonctionnalité d'accès hybride plus efficace et/ou améliorée au sein d'un réseau de télécommunications (100), dans lequel, au moyen de l'utilisation d'un dispositif de passerelle domestique (50), au moins un dispositif client (51, 52) est capable de se connecter au réseau de télécommunications (100) via un premier réseau d'accès (101) et via un second réseau d'accès (201), le premier réseau d'accès (101) étant un réseau d'accès d'un réseau de télécommunications de ligne fixe et le second réseau d'accès (201) étant un réseau d'accès d'un réseau de communication mobile,
dans lequel l'entité de station de base (211) est configurée de telle sorte qu'un premier trajet de transmission de données de plan utilisateur (300) et au moins un second trajet de transmission de données de plan utilisateur (400) sont établis entre, d'une part, l'au moins un dispositif client (51, 52) ou le dispositif de passerelle domestique (50), et, d'autre part, le nœud de point d'agrégation d'accès hybride (560),
dans lequel, afin d'établir le premier trajet de transmission de données de plan utilisateur (300), le dispositif de passerelle domestique (50) est connecté à un nœud d'accès à large bande (111) du premier réseau d'accès (101), le nœud d'accès à large bande (111) étant connecté au nœud de point d'agrégation d'accès hybride (560), et, afin d'établir le second trajet de transmission de données de plan utilisateur (400), le dispositif de passerelle domestique (50) est connecté à l'entité de station de base (211) faisant partie du second réseau d'accès (201), l'entité de station de base (211) étant connectée au nœud de point d'agrégation d'accès hybride (560),
dans lequel, afin d'établir le second trajet de transmission de données de plan utilisateur (400), le nœud de point d'agrégation d'accès hybride (560) est configuré de telle sorte qu'un tunnel est établi entre, d'une part, l'au moins un dispositif client (51, 52) ou le dispositif de passerelle domestique (50) ou l'entité de station de base (211), et, d'autre part, le nœud de point d'agrégation d'accès hybride.

8. Système pour fournir une fonctionnalité d'accès hybride plus efficace et/ou améliorée au sein d'un réseau de télécommunications (100), dans lequel, au moyen de l'utilisation du dispositif de passerelle domestique (50), au moins un dispositif client (51, 52) est capable de se connecter au réseau de télécommunications (100) via un premier réseau d'accès (101) et via un second réseau d'accès (201), le système comprenant le dispositif de passerelle domestique (50), les premier et second réseaux d'accès (101, 201) et le réseau de télécommunications (100), le premier réseau d'accès (101) étant un réseau d'accès d'un réseau de télécommunications de ligne fixe et le second réseau d'accès (201) étant un réseau d'accès d'un réseau de communication mobile, dans lequel le réseau de télécommunications (100) comprend un nœud de point d'agrégation d'accès hybride (560),
dans lequel le système est configuré de telle sorte qu'un premier trajet de transmission de données de plan utilisateur (300) et au moins un second trajet de transmission de données de plan utilisateur (400) sont établis entre, d'une part, l'au moins un dispositif client (51, 52) ou le dispositif de passerelle domestique (50), et, d'autre part, le nœud de point d'agrégation d'accès hybride (560),
dans lequel, afin d'établir le premier trajet de transmission de données de plan utilisateur (300), le dispositif de passerelle domestique (50) est connecté à un nœud d'accès à large bande (111) du premier réseau d'accès (101), le nœud d'accès à large bande (111) étant connecté au nœud de point d'agrégation d'accès hybride (560), et, afin d'établir le second trajet de transmission de données de plan utilisateur (400), le dispositif de passerelle domestique (50) est connecté à une entité de station de base (211) du second réseau d'accès (201), l'entité de station de base (211) étant connectée au nœud de point d'agrégation d'accès hybride (560),
dans lequel, afin d'établir le second trajet de transmission de données de plan utilisateur (400), le système est configuré de telle sorte que :
- une procédure d'attachement est initiée au moyen de la transmission d'une demande d'attachement à l'entité de station de base (211),
- la procédure d'attachement est réalisée au moyen d'une procédure d'authentification exécutée par l'entité de station de base (211),
- un tunnel est établi vers le nœud de point d'agrégation d'accès hybride (560).

9. Programme comprenant un code de programme lisible par ordinateur qui, lorsqu'il est exécuté sur un ordinateur ou sur un dispositif de passerelle domestique (50) ou sur une entité de station de base (211) ou sur un nœud de point d'agrégation d'accès hybride (560), ou en partie sur le dispositif de passerelle domestique (50) et/ou en partie sur l'entité de station de base (211) et/ou en partie sur le nœud de point d'agrégation d'accès hybride (560), amène l'ordinateur ou le dispositif de passerelle domestique (50) ou l'entité de station de base (211) ou le nœud de point d'agrégation d'accès hybride (560) à réaliser un procédé selon l'une des revendications 1 à 5.

10. Produit-programme d'ordinateur pour fournir une fonctionnalité d'accès hybride plus efficace et/ou améliorée au sein d'un réseau de télécommunications (100), le produit-programme d'ordinateur comprenant un programme d'ordinateur stocké sur un support de stockage, le programme d'ordinateur comprenant un code de programme qui, lorsqu'il est exécuté sur un ordinateur ou sur un dispositif de passerelle domestique (50) ou sur une entité de station de base (211) ou sur un nœud de point d'agrégation d'accès hybride (560), ou en partie sur le dispositif de passerelle domestique (50) et/ou en partie sur l'entité de station de base (211) et/ou en partie sur le nœud de point d'agrégation d'accès hybride (560), amène l'ordinateur ou le dispositif de passerelle domestique (50) ou l'entité de station de base (211) ou le nœud de point d'agrégation d'accès hybride (560) à réaliser un procédé selon l'une des revendications 1 à 5.
